(19) Europäisches Patentamt
European Patent Office
Office européen des brevets

(11) **EP 4 465 111 A1**

(12) **EUROPEAN PATENT APPLICATION**

(43) Date of publication:
**20.11.2024   Bulletin 2024/47**

(21) Application number: **23194616.1**

(22) Date of filing: **31.08.2023**

(51) International Patent Classification (IPC):
**G02B 26/10** $^{(2006.01)}$       **B23K 26/082** $^{(2014.01)}$

(52) Cooperative Patent Classification (CPC):
**G02B 26/105; B23K 26/082**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2023   CN 202310551457
16.05.2023   CN 202321180837 U**

(71) Applicant: **Shenzhen Atomstack Technologies
Co., Ltd.
518172 Shenzhen Guangdong (CN)**

(72) Inventors:
• **HE, Yun
Longgang Dist., Shenzhen, 518172 (CN)**
• **LI, Zebin
Longgang Dist., Shenzhen, 518172 (CN)**

(74) Representative: **Herrero & Asociados, S.L.
Edificio Aqua - Agustín de Foxá, 4-10
28036 Madrid (ES)**

(54) **SCANNING DEVICE, LASER APPARATUS, AND METHOD, FOR CONTROLLING THE SAME**

(57)   The present disclosure provides a scanning device, including a laser transmitter and a reflection assembly. The reflection assembly includes a drive member and a first reflector, the drive member being configured to drive the first reflector to rotate; the laser transmitter is configured to emit a laser beam, and an emitting end of the laser transmitter is arranged facing the first reflector, causing the laser beam being emitting toward the first reflector and the first reflector to reflect the laser beam to change a direction of the laser beam.

EP 4 465 111 A1

## Description

### TECHNICAL FIELD

The present disclosure relates to the field of optical control technologies, and in particular to a method, an apparatus, a system, an equipment, and a storage medium for controlling a scanning device.

### BACKGROUND

Laser processing is a processing technology that utilizes the characteristics of laser beam and substance interaction to perform cutting, welding, surface treatment, perforation, micromachining, etc. on materials (including metals and non-metals). Laser processing as an advanced manufacturing technology has been widely applied in automotive, electronics, electrical appliances, aviation, metallurgy, machinery manufacturing and other important sectors of the national economy, to play an increasingly important role on improvement of product quality, labor productivity, automation, non-pollution, reduction of material consumption, and so on.

In the field of intelligent manufacturing engraving and cutting tools, most of the laser processing devices on the market relies on the motion of scanners or lasers in the X-axis and Y-axis directions to realize scanning or cutting. The speed of laser processing is limited by the speed of motors in the X- and Y-axes, which makes laser processing inefficient and unable to meet the growing needs of users.

### SUMMARY OF THE DISCLOSURE

The main object of the present disclosure is to provide a method, an apparatus, a system, an equipment, and a storage medium for controlling a scanning device, which can solve the problem of low efficiency of laser processing in the related art.

For the purpose of the above, the following technical solutions are proposed as implementation.

In one aspect, a scanning device, comprises a laser transmitter and a reflection assembly; wherein the reflection assembly comprises a drive member and a first reflector, the drive member being configured to drive the first reflector to rotate; the laser transmitter is configured to emit a laser beam, and an emitting end of the laser transmitter is arranged facing the first reflector, causing the laser beam being emitting toward the first reflector and the first reflector to reflect the laser beam to change a direction of the laser beam.

In different embodiments, the scanning device further comprises a housing; wherein the laser transmitter and the reflection assembly are arranged in the housing; the housing defines a light outlet, and the laser beam is capable of being emitted through the light outlet to act on an external object.

In different embodiments, a rotation track of the first reflector is a first sector, and a motion track of the reflected laser beam is a second sector; a circle center of the first sector is coincided with a circle center of the second sector, and a radius of the second sector is greater than a radius of the first sector, thereby making an arc of the second sector larger than an arc of the first sector.

In different embodiments, the light outlet is elongated in shape.

In different embodiments, the reflection assembly further comprises an optical element, and the optical element is arranged facing the first reflector, such that the laser beam reflected by the first reflector acts on the optical element; the optical element is configured to change the direction of the laser beam.

In different embodiments, the scanning device further comprises a housing; wherein the reflection assembly is arranged in the housing; the housing defines a light outlet, and the light outlet is disposed facing the optical element, such that the laser beam reflected by the first reflector acts on the optical element and is reflected or refracted by the optical element and emitted through the light outlet in a direction perpendicular to a horizontal plane.

In different embodiments, the optical element is arcuate in shape, and the arcuate shape is parallel to the arc of the second sector.

In different embodiments, a center of the optical element in a height direction is in a same straight line as a position of the laser beam directed to the first reflector.

In different embodiments, the emitting end of the laser transmitter is in a same straight line as a center region of the first reflector, such that the laser beam is directed to the first reflector at a position of the center region of the first reflector.

In different embodiments, the first reflector is a rectangular sheet structure.

In different embodiments, the first reflector is disposed at a central position within the housing in a length direction, and the first reflector is disposed on a side of the housing away from the light outlet in a width direction.

In another aspect, a laser apparatus, comprises the scanning device comprises a laser transmitter and a reflection assembly; wherein the reflection assembly comprises a drive member and a first reflector, the drive member being configured to drive the first reflector to rotate; the laser transmitter is configured to emit a laser beam, and an emitting end of the laser transmitter is arranged facing the first reflector, causing the laser beam being emitting toward the first reflector and the first reflector to reflect the laser beam to change a direction of the laser beam.

In different embodiments, the laser apparatus further comprises a housing; wherein the laser transmitter and the reflection assembly are arranged in the housing; the housing defines a light outlet, and the laser beam is capable of being emitted through the light outlet to act on an external object.

In different embodiments, a rotation track of the first reflector is a first sector, and a motion track of the reflected laser beam is a second sector; a circle center of the first sector is coincided with a circle center of the second sector, and a radius of the second sector is greater than a radius of the first sector, thereby making an arc of the second sector larger than an arc of the first sector.

In different embodiments, the reflection assembly further comprises an optical element, and the optical element is arranged facing the first reflector, such that the laser beam reflected by the first reflector acts on the optical element; the optical element is configured to change the direction of the laser beam.

In another aspect, a method for controlling a scanning device, performed by a control system; wherein the control system comprises at least a scanning device, the scanning device comprising at least a laser transmitter and a reflection assembly; the reflection assembly comprises at least a first reflector and an optical element, the first reflector is configured to reflect a laser beam emitted by the laser transmitter to the optical element, and the optical element is configured to reflect or refract the laser beam to an external object, the laser beam being reflect or refracted to the external object in a direction perpendicular to a machining surface of the external object; the method comprises: in response to receiving a laser scanning command, obtaining a scanning radius of the scanning device, controlling the laser transmitter to emit the laser beam to the first reflector, and controlling the first reflector to perform a rotational motion according to a target scanning angle in the laser scanning command, for changing a reflection direction of the laser beam and causing the laser beam to form a target arc-shaped motion track on the optical element; wherein the scanning radius is preset; collecting a current rotation angle of the first reflector; determining a current displacement compensation value of the scanning device based on the current rotation angle, the target scanning angle, and the scanning radius; and controlling the scanning device, according to the current displacement compensation value, to move in a straight line along a target coordinate axis of a preset coordinate system of the scanning device, and returning to perform the determining a current displacement compensation value of the scanning device based on the current rotation angle, the target scanning angle, and the scanning radius, until the current angle rotation is equal to the target scanning angle; after the laser beam with the target arc-shaped motion track formed the second reflector is emitted, forming a target straight-line motion track on the external object; wherein the preset coordinate system of the scanning device is a right-angle coordinate system established with an optical center of the first reflector as an origin, and the target coordinate axis is an coordinate axis, in the preset coordinate system of the scanning device, that is parallel to each other with the laser beam after being reflected from the optical center.

In different embodiments, the determining a current displacement compensation value of the scanning device based on the current rotation angle, the target scanning angle, and the scanning radius comprises: determining a target chord length corresponding to the target arc-shaped motion track based on the target scanning angle and the target arc-shaped motion track; and determining the current displacement compensation value of the scanning device based on the target chord length, the current rotation angle, the target scanning angle, and the scanning radius.

In different embodiments, determining the current displacement compensation value of the scanning device based on the target chord length, the current rotation angle, the target scanning angle, and the scanning radius comprises: determining a first trigonometric function value of the current rotation angle based on the target chord length, the current rotation angle, and the scanning radius; determining a second trigonometric function value of the target scanning angle based on the target chord length, the target scanning angle, and the scanning radius; and determining the current displacement compensation value of the scanning device based on the first trigonometric function value, the second trigonometric function value, and the scanning radius.

In different embodiments, the first trigonometric function value is a first cosine value and the second trigonometric function value is a second cosine value, and the determining the current displacement compensation value of the scanning device based on the first trigonometric function value, the second trigonometric function value, and the scanning radius comprises: determining a first difference between the first cosine value and the second cosine value; and inputting the first difference value and the scanning radius into a predetermined displacement compensation algorithm, and obtaining the current displacement compensation value output by the displacement compensation algorithm.

In different embodiments, the displacement compensation algorithm comprises a following mathematical expression:

$$PE = OP \times (COS\beta - COS\alpha);$$

where PE is the current displacement compensation value, OP is the scanning radius, $\beta$ is the current rotation angle, and $\alpha$ is the target scanning angle.

In all, the present disclosure provides a scanning device, in which a laser beam is emitted by a laser transmitter, and the laser beam emitted by the laser transmitter is reflected by a reflector, such that the laser beam is emitted from a light outlet defined on a housing. The reflector is driven to rotate by a drive member so as to change the direction of laser emission, realizing a change in the position of the laser beam acting on an external object; moreover, by rotating the first reflector by a small angle, the change of the emission direction with a larger arc can be caused after the reflection by the first reflector, thereby realizing small angle-large distance leverage efficiency improvement, thus improving operation efficiency.

Therefore, such a scanning device can drive the first reflector to rotate through the drive member inside the housing, so as to make changes to the emission direction of the laser beam, realizing a change in the position of the laser beam acting on the external object, thereby expanding the action range of the laser beam and improving the scanning efficiency to a certain extent.

## BRIEF DESCRIPTION OF THE DRAWINGS

In order to more clearly illustrate the technical solutions in the embodiments of the present disclosure or related art, the accompanying drawings to be used in the description of the embodiments or related art will be briefly introduced below, and it will be obvious that the accompanying drawings in the following description are only some of the embodiments of the present disclosure, and that for those skill in the art, other drawings can be obtained on the basis of the accompanying drawings without creative labor.

FIG. 1 is a perspective assembled view of a laser apparatus according to an embodiment of the present disclosure.
FIG. 2 is a perspective assembled view of the laser apparatus shown in FIG. 1 with a housing omitted.
FIG. 3 is a perspective assembled view of a scanning device according to an embodiment of the present disclosure.
FIG. 4 is a perspective disassembled view of a scanning device according to an embodiment of the present disclosure.
FIG. 5 is a perspective assembled view of a scanning device according to an embodiment of the present disclosure with a housing omitted.
FIG. 6a is a perspective view of an optical element according to an embodiment of the present disclosure.
FIG. 6b is a perspective view of an optical element according to another embodiment of the present disclosure.
FIG. 7 is a structural schematic view of a scanning device according to an embodiment of the present disclosure.
FIG. 8 is a structural block view of a control system for a scanning device according to an embodiment of the present disclosure.
FIG. 9 is a flowchart of a control method of a scanning device according to an embodiment of the present disclosure.
FIG. 10 is a schematic view of a reflection path of a laser beam according to an embodiment of the present disclosure.
FIG. 11 (a) is another structural block view of a control system for a scanning device according to an embodiment of the present disclosure.
FIG. 11 (b) is a further another structural block view of a control system for a scanning device according to an embodiment of the present disclosure.
FIG. 12 is another flowchart of a control method of a scanning device according to an embodiment of the present disclosure.
FIG. 13 is a structural block view of a control device for a scanning device according to an embodiment of the present disclosure.
FIG. 14 is a structural block view of a computer equipment according to an embodiment of the present disclosure.

## DETAILED DESCRIPTION

The technical solutions in the embodiments of the present disclosure will be clearly and completely described below in conjunction with the accompanying drawings in the embodiments of the present disclosure, and it is clear that the described embodiments are only a part of the embodiments of the present disclosure and not all of the embodiments. Based on the embodiments in the present disclosure, all other embodiments obtained by those skilled in the art without making creative labor are within the scope of the present disclosure.

It is to be noted that all directional indications (such as up, down, left, right, front, back ......) in the embodiments of the present disclosure are only intended to explain the relative positional relationship, motion, etc. among various elements in a particular attitude (as shown in the accompanying drawings), and that if the particular attitude changes, the directional indications change correspondingly.

Furthermore, descriptions involving "first", "second", etc. in the present disclosure are for descriptive purposes only and are not to be understood as indicating or implying their relative importance or implicitly specifying the number of technical features indicated. That is, a feature defined as "first" or "second" may expressly or implicitly include at least one of the described features. In addition, the technical solutions between the various embodiments may be combined with each other, but it must be based on the fact that those skilled in the art can realize them. When the combination of technical solutions is contradictory or unattainable, it should be considered that the combination of such technical solutions does not exist and is not included in the scope of the present disclosure.

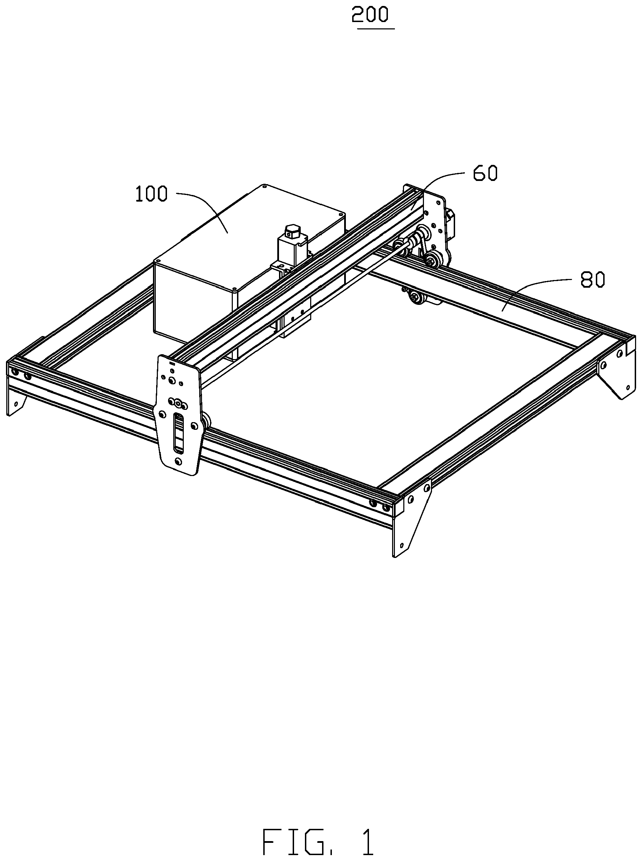

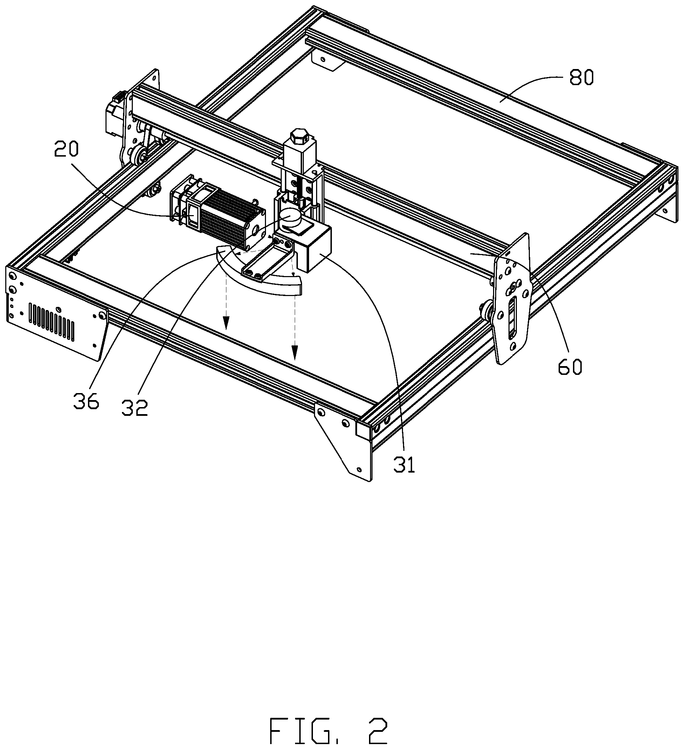

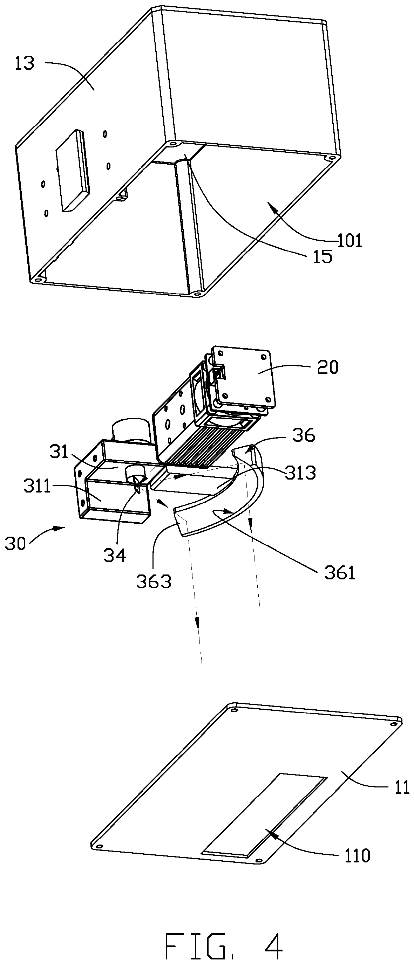

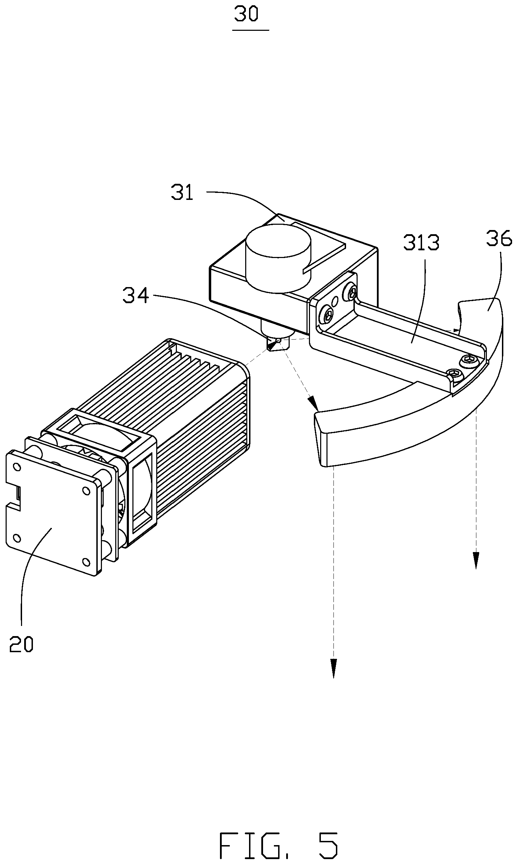

Referring to FIGS. 1-7, embodiments of the present disclosure provide a scanning device 100 for a laser apparatus 200, including a housing 10, a laser transmitter 20, and a reflection assembly 30, the laser transmitter 20 and the reflection assembly 30 being disposed within the housing 10.

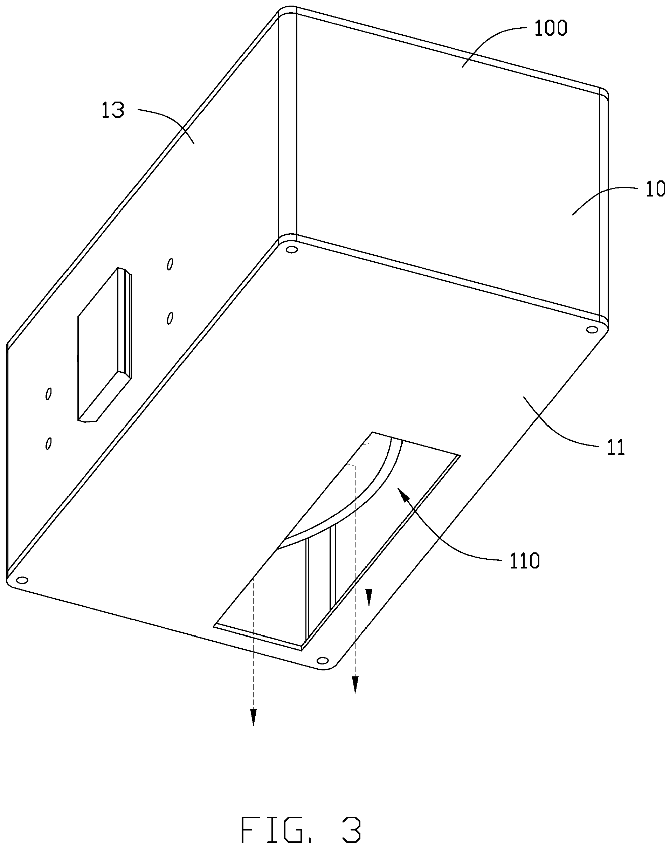

Referring to FIGS. 3-6, the housing 10 is substantially rectangular in shape, including a bottom wall 11, a side wall 13 vertically connected to an edge of the bottom wall 11, and a top wall 15 opposite to the bottom wall 11. The bottom wall 11, the side wall 13, and the top wall 15 are connected to enclose a holding space 101. The laser transmitter 20 and the reflection assembly 30 are received in the holding space 101. The bottom wall 11 defines a light outlet 110, and a laser beam is reflected by the emitting component 30 and emitted through the light outlet 110 to act on an external object.

The laser transmitter 20 is fixedly arranged at an end of the side wall 13 for emitting the laser beam. An emitting end of the laser transmitter 20 faces the other end of the side wall 13.

The reflection assembly 30 includes a mounting member 31, a drive member 32, a first reflector 34, and an optical element 36. The drive member 32, the first reflector 34, and the optical element 36 are arranged on the mounting member 31, and the drive member 32 is configured to drive the first reflector 34 to rotate.

Specifically, the mounting member 31 is fixedly arranged on the other end of the side wall 13 and is disposed opposite to the laser transmitter 20. The mounting member 31 includes a first mounting portion 311 and a second mounting portion 313 connected to the first mounting portion 311.

The drive member 32 is arranged on the first mounting portion 311, and a rotation axis of the drive member 32 is perpendicular to an emission direction of the laser beam emitted by the laser transmitter 20.

The first reflector 34 is connected to the drive member 32, such that the first reflector 34 may be driven to rotate by the drive member 32. A rotation axis of the first reflector 34 is perpendicular to the emission direction of the laser beam emitted by the laser transmitter 20. The first reflector 34 faces the emitting end of the laser transmitter 20, such that the laser beam acts on the first reflector 34 and is reflected by the first reflector 34 to change the emission direction of the laser beam. During operation, the first reflector 34 rotates to form a rotation track, and the rotation of the first reflector 34 causes the emission direction of the laser beam reflected by the first reflector 34 to continuously change to form a motion track. The center of the rotation track of the first reflector 34 coincides with the center of the motion track of the emission direction of the laser beam.

The optical element 36 is configured to reflects or refracts the laser beam so as to change the emission direction, such that the laser beam.

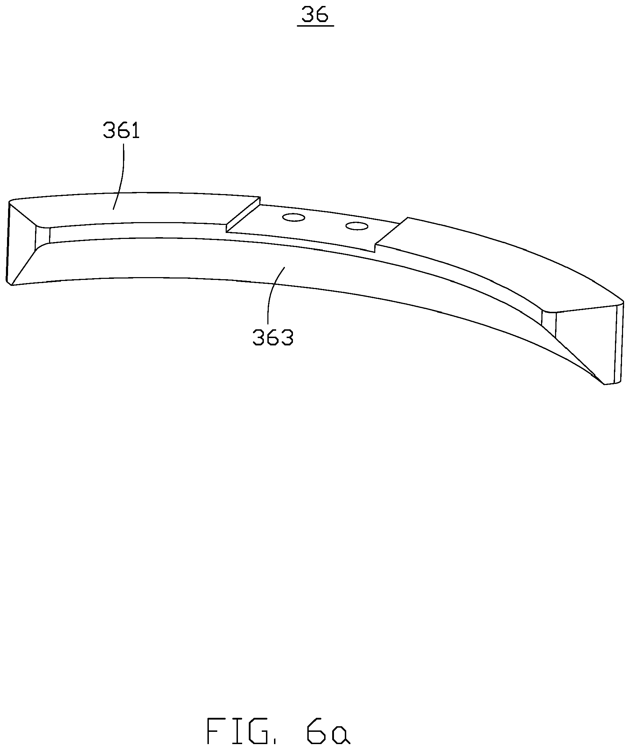

In one exemplary embodiment, as shown in FIG. 6a, the optical element 36 is a concave reflector, and is arranged facing the first reflector 34, such that the laser beam reflected by the first reflector 34 acts on the optical element 36. The optical element 36 includes a fixed surface 361 and an optical surface 363 connected to the fixed surface 361. The fixed surface 361 is fixedly arranged on the second mounting portion 313. After the laser beam is reflected by the first reflector 34, it is then acted on the optical surface 363, and the optical surface 361 reflects the laser beam again so as to change the emission direction again.

The drive member 32 can drive the first reflector 34 to rotate to form a rotation track, and the first reflector 34 rotates such that the emission direction of the laser beam reflected by the first reflector 34 is constantly changed to form a motion track, such that the position of the laser beam acting on the external object is constantly changed through the rotation of the first reflector 34.

The rotation of the drive member 32 causes the position of the laser beam acting on the external object to change, which is structurally reasonable and responsive as compared to a design where the motion of the entire scanning device causes the position of the laser beam acting on the external object to change, thereby improving the speed of scanning or cutting.

When the present embodiments are implemented, the scanning device emits a laser beam through the laser transmitter 20 and reflects the laser beam emitted from the laser transmitter 20 through the first reflector 34 and the optical element 36, such that the laser beam is emitted from the light outlet 110 formed on the housing 10.

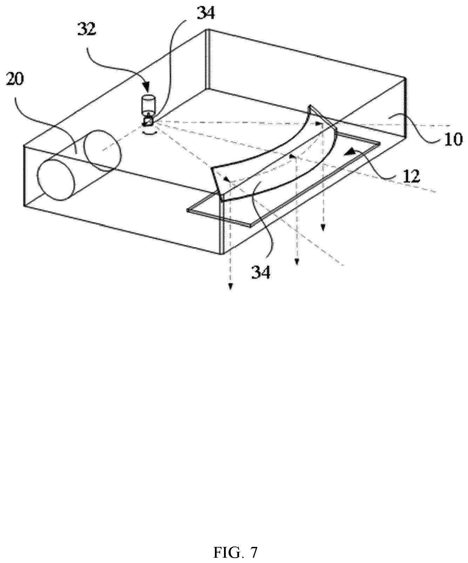

Further referring to FIG. 7, driving the first reflector 34 to rotate by the drive member 32 can cause the first reflector 34 to form a rotation track, and the laser beam reflected by the first reflector 34 forms a motion track of which the center coincides with the center of the rotation track, such that the emission direction of the laser beam can be changed through the rotation of the first reflector 34, and the change of the position of the laser beam acting on the external object can be realized. Moreover, by rotating the first reflector 34 by a small angle, the change of the emission direction with a larger arc can be caused after the reflection by the first reflector 34, thereby realizing small angle-large distance leverage efficiency improvement, thus improving operation efficiency.

Therefore, such a scanning device can drive the first reflector 34 to rotate through the drive member 32 inside the housing 10, so as to make changes to the emission direction of the laser beam, realizing a change in the position of the laser beam acting on the external object, thereby expanding the action range of the laser beam and improving the scanning efficiency to a certain extent.

In conjunction with FIG. 7, a rotation track of the first reflector 34 is a first sector, and a motion track of the reflected laser beam is a second sector. The circle centers of the first sector and the second sector are coincided, and the radius of the second sector is greater than the radius of the first sector, thereby making the arc of the second sector larger than the arc of the first sector.

Specifically, the radius of the first sector is half of a bottom edge of the first reflector 34, the arc of the first sector is formed by the rotation of the first reflector 34, the radius of the second sector is a distance from the first reflector 34 to the light outlet 110, and the arc of the second sector is formed by the action of the laser beam reflected by the first reflector 34 on the light outlet 110.

The laser beam reflected by the first reflector 34 acts on the external object after being emitted from the light outlet 110. Therefore, the arc of the second sector being larger than the arc of the first sector and the curvature of the second sector being greater than the curvature of the first sector may make the emission direction of the laser beam change by a smaller angular rotation of the reflector, and the emission direction of the laser beam is changed to a larger extent. In this way, the laser beam acts on the external object with a larger range.

The above design can realize small angle-large distance leverage efficiency improvement, and it is faster and more efficient for changing the position of action by rotating the angle of the first reflector 34 than changing the position of action on the external object by moving the scanning device.

In conjunction with FIG. 3, the first reflector 34 is arranged at a center position inside the housing 10 in a length direction, and the first reflector 34 is arranged on a side inside the housing 10 away from the light outlet 12 in a width direction.

Specifically, arranging the first reflector 34 at the center enables the laser beam reflected by the first reflector 34 to act symmetrically on the left and right sides, thereby greatly expanding the curvature of the second sector formed by the laser beam reflected by the first reflector 34, thus enabling the laser beam to act on the external object in a larger range.

Arranging the first reflector 34 on a rear side inside the housing 10 may maximize the radius of the second sector, thereby making the laser beam have a larger range of action on the external object.

In some embodiments, the light outlet 110 is elongated in shape.

Specifically, the elongated light outlet 110 facilitates laser beams directed at different positions of the light outlet 110 to be emitted from the light outlet 110.

The second reflector is a concave reflector, and the second reflector 36 is arranged facing the first reflector 34, such that the laser beam reflected by the first reflector 34 acts on the second reflector 36.

The optical element 36 is configured to change the emission direction of the laser beam, the light outlet 110 is defined on the bottom wall 11 of the housing 10, and the light outlet 110 faces the optical element 36, such that after the laser beam reflected by the first reflector 34 passes through the optical element 36, and the laser beam is emitted from the light outlet 110 in a direction perpendicular to a horizontal plane.

In some embodiments, the optical element 36 is a concave reflector, the concave reflector is arcuate in shape, and the arcuate optical element 36 is inclined 45° towards the first reflector 34, thereby causing the laser beam to have an angle of incidence with the optical element 36 of 45°, which in turn causes the laser beam, after passing through the optical element 36, to be emitted from the light outlet 110 in the direction perpendicular to the horizontal plane.

Specifically, the combined scanning of the first reflector 34 and the optical element 36 enables a uniform focal length of the laser beam emitted from the light outlet 110 towards the external object, which results in a uniform-lightness pattern formed by marking.

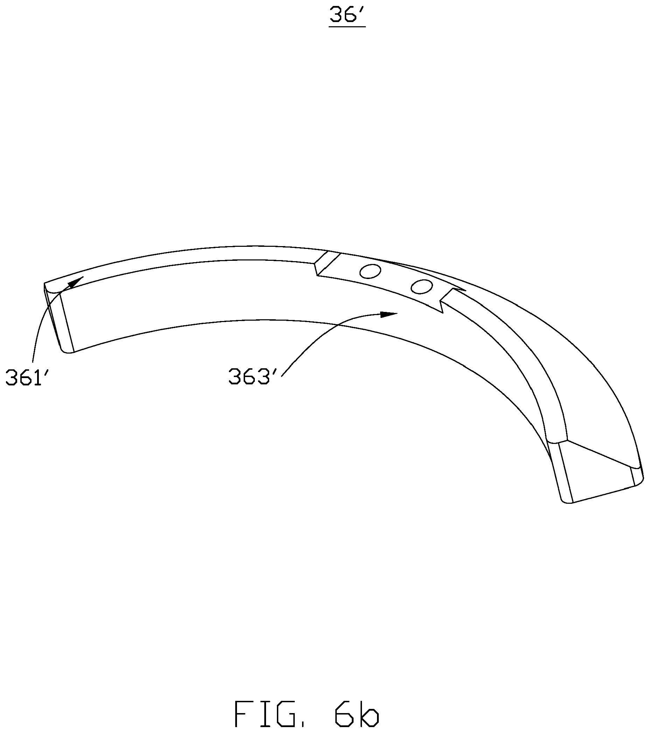

In some other embodiments, as shown in FIG. 6b, the optical element 36' is an arcuate lens, and is arranged facing the first reflector 34, such that the laser beam reflected by the first reflector 34 acts on the optical element 36'. The optical element 36' includes a fixed surface 361' and an optical surface 363' connected to the fixed surface 361'. The fixed surface 361' is fixedly arranged on the second mounting portion 313'. After the laser beam is reflected by the first reflector 34', it is then acted on the optical surface 363', and the optical surface 361' refracts the laser beam so as to change the emission direction again.

In addition, the reflected arc-shaped laser beam is converted into a straight laser beam. An arc-shaped laser beam will act on the external object at an inclined angle from the light outlet 110, such that the cutting of the external object will be subject to the phenomenon of beveling, whereas a straight laser beam will act on the external object always at an angle perpendicular to the horizontal plane, such that the cutting of the external object will not be subject to the phenomenon of beveling.

In some embodiments, a center of the optical element 36 in a height direction is in the same straight line as the position where the laser beam is directed to the first reflector 34.

Further, the emitting end of the laser transmitter 20 is in the same straight line as a center region of the first reflector 34, such that the laser beam is directed to the first reflector 34 at the position of the center region of the first reflector 34.

Specifically, after the laser beam is emitted from the emitting end of the laser transmitter 20 to the center region of the first reflector 34, the laser beam is reflected from the center position and emitted to the center position of the optical element 36 in the height direction.

In some embodiments, the first reflector 34 is a rectangular sheet structure.

The first reflector 34 is a square sheet structure, and a front side of the first reflector 34 is an operation surface for receiving and reflecting the laser beam emitted from the emitting end of the laser transmitter 20.

Such a sheet structure may facilitate finding the center position for mounting the first reflector 34, and the sheet structure may enable the first reflector 34 to be rotated at a relatively large angle while achieving the same effect as compared to a structure such as a square tetrahedron.

In some embodiments, the drive member 32 is a motor, and the first reflector 34 is coaxially connected to the motor.

The motor can drive the first reflector 34 to rotate a corresponding angle under the control of the control system, which has a simple structure and a fast response speed with high efficiency.

In specific use, the scanning device is arranged to a laser apparatus, the laser beam emitted by the scanning device continuously scans back and forth with the rotation of the first reflector 34, and the laser apparatus drives the scanning device to move left and right, thereby enabling the entire scanning device to move left and right. In this way, the scanning device can be driven by the laser apparatus to make a change in position, thereby changing the action range of the scanning device.

Embodiments of the present disclosure further provide a laser apparatus 200, including a scanning device 100, a slide bar assembly 60, and a frame 80, the slide bar assembly 60 being arranged on the frame 80, and the scanning device 100 being arranged on the slide bar assembly 60. Specifically, a side wall 13 of the housing 10 is fixedly connected to the slide bar assembly 60. During operation, the slide bar assembly 60 drives the housing 10 to slide on the frame 80, thereby driving a laser transmitter 20 and a transmitting assembly 30 arranged in the housing 10 to slide, thus changing the action position of the laser beam.

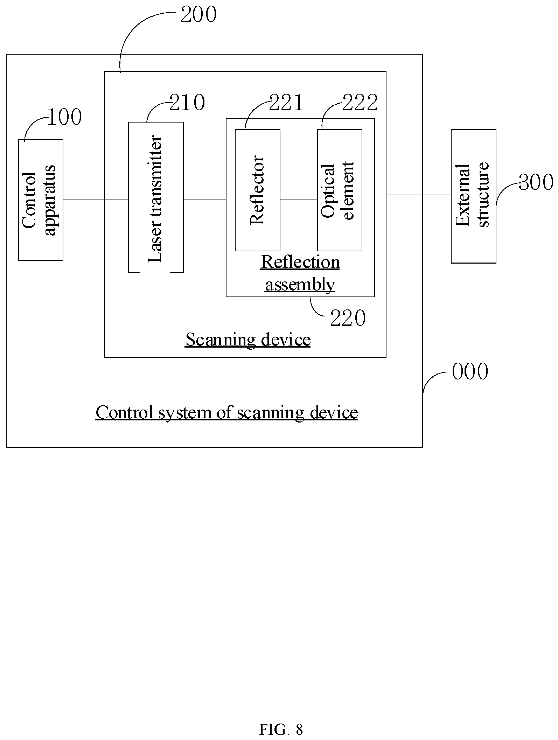

Referring to FIG. 8, the present disclosure further provides a control method of a scanning device, and FIG. 8 is a structural block view of a control system for a scanning device according to an embodiment of the present disclosure. As shown in FIG. 8, the control system includes at least a control device 100 and a scanning device 200 electrically connected to the control device 100.

The control device 100 may be configured to perform various steps of the control method of the scanning device provided in the present disclosure; the scanning device 200 includes at least a laser transmitter 210 and a reflection assembly 220, and the reflection assembly 220 includes at least a first reflector 221 and an optical element 222, the first reflector 221 being configured to reflect a laser beam emitted by the laser transmitter 210 to the optical element 222, and the optical element 222 being configured to reflect or refract the laser beam to an external object 300; the reflected laser beam is perpendicular to a machining surface of the external object, and the machining surface may be a horizontal or vertical surface or another plane defined based on track points (laser dots) formed on the external object by any two laser beams; i.e., a placement direction of the scanning device may be adjusted based on a placement direction of the external object, such as a workpiece, such that the reflected laser beam is perpendicular to the machining surface of the external object, which in turn may mitigate the problem of formation of beveled cuts on the external object caused by the laser beam performing the scanning processing, such as cutting, on the external object.

Exemplarily, the control device includes, but is not limited to, a field control unit, a programmable logic controller (PLC), and a remote terminal unit (RTU), etc. of a distributed control system (DCS), which control the production process. The control device can control the laser transmitter and the reflection assembly, monitor operation data of the laser transmitter and the reflection assembly, and obtain the operation data of the laser transmitter and the reflection assembly during the operation process. The control device is electrically connected to the laser transmitter and the reflection assembly.

The scanning device is configured for laser scanning of the external object. Further, the scanning device 200 includes at least a laser transmitter 210 and a reflection assembly 220. The laser transmitter 210 can emit a laser beam, exemplarily, the laser transmitter 210 may be a device capable of emitting laser beam, such as lasers. The reflection assembly 220 includes a first reflector and an optical element, where the optical element is an annular concave reflector (or called an arcuate concave reflector) or an annular lens (or called an arcuate lens). The control device can control the first reflector to rotate to continuously change the reflection direction, such that the laser beam with different reflection directions can be reflected on the optical element, defining an arc-shaped motion track (referred to as an arc track or an arcuate track). The optical element then reflects or refracts the laser beam in different direction to the external object to form a straight-line motion track on the external object. The external object includes but is not limited to a workpiece to be processed, etc.

It is to be noted that to realize defining the straight-line motion track on the external object, i.e., the defining of a straight scanning line on the external object, conversion is necessary to be performed by a control method of the scanning device shown in the present disclosure, with specific reference to the following.

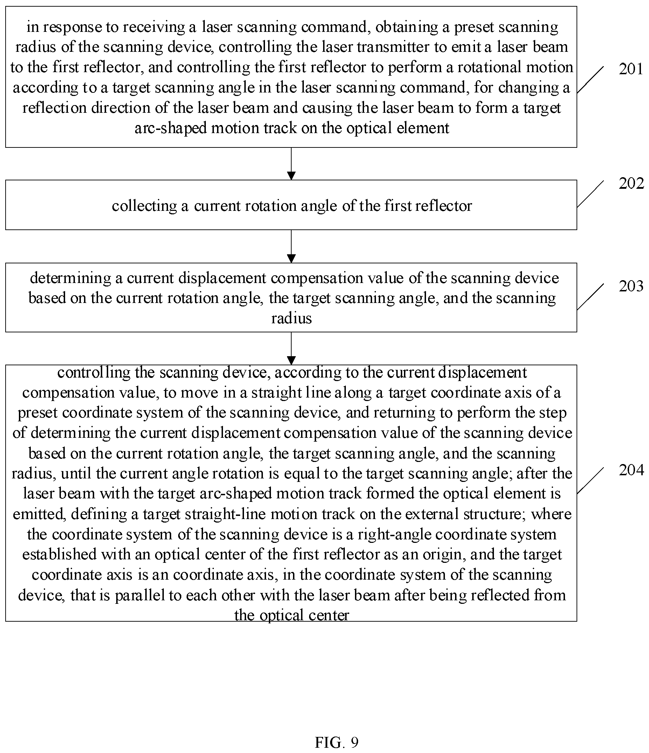

Referring to FIG. 9, FIG. 9 is a flowchart of a control method of a scanning device according to an embodiment of the present disclosure. The control method as shown in FIG. 9 is applied to a control system for the above scanning device, and the control method includes the following steps.

At block 201: in response to receiving a laser scanning command, obtaining a preset scanning radius of the scanning device, controlling the laser transmitter to emit a laser beam to the first reflector, and controlling the first reflector to perform a rotational motion according to a target scanning angle in the laser scanning command, for changing a reflection direction of the laser beam and causing the laser beam to form a target arc-shaped motion track on the optical element.

It is noted that to perform laser scanning on the external object, a laser scanning command is required to be issued, which may be issued by a user at a preset control interface, and the laser scanning command is received by the control device. The laser scanning command is configured for controlling the scanning device to cause the scanning device to start laser scanning processing. Specifically, upon receiving the laser scanning command, the control device is required to control the laser transmitter and the reflection assembly to start working. Specifically, upon receiving the laser scanning command, a preset scanning radius of the scanning device is obtained, the laser transmitter is controlled to send a laser beam to the first reflector, and the first reflector is controlled to perform a rotational motion according to a target scanning angle in the laser scanning command, thereby changing the reflection direction of the laser beam, so as to cause the laser beam to form a target arc-shaped motion track on the optical element. The scanning radius is a radius of the scanning beam, and the scanning radius is a mounting distance from an optical center of the first reflector to the optical element. The optical element may be an annular reflector or an annular lens. The laser scanning command includes at least a target scanning angle, and the target scanning angle is the maximum scanning angle that can be realized during the laser scanning process. The target scanning angle may be determined by the user according to different scanning needs and is constant during the scanning process.

At block 202: collecting a current rotation angle of the first reflector.

Further, to convert the target arc-shaped motion track of the laser beam formed on the optical element into a straight-line motion track, it is necessary to collect the current rotation angle of the first reflector during the rotation of the first reflector. The current rotation angle is the rotation angle of the first reflector currently. With the rotational motion of the first reflector, the current rotation angle gradually changes until it is equal to the target scanning angle. Therefore, the current rotation angle can reflect the current scanning angle of the laser beam, and then based on the current rotation angle, it can be determined whether the laser beam is reflected on the optical element at point A, point P, or point B, such that track points in the target arc-shaped motion track formed on the optical element are converted into track points in the straight-line motion track.

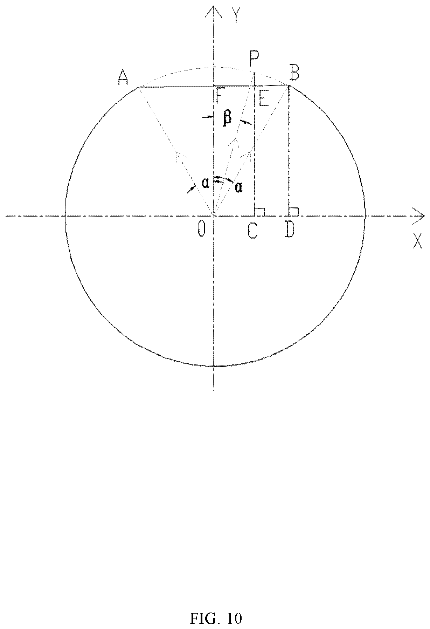

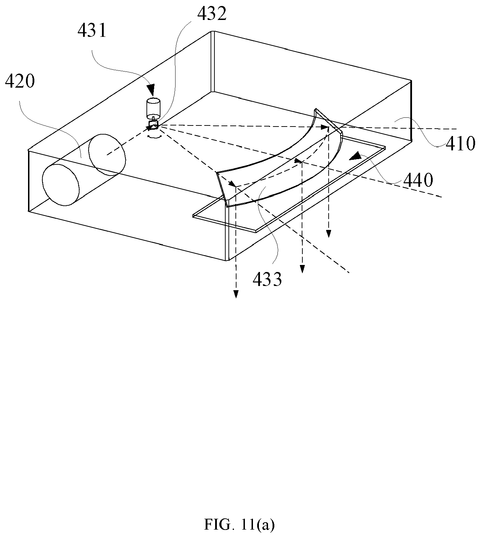

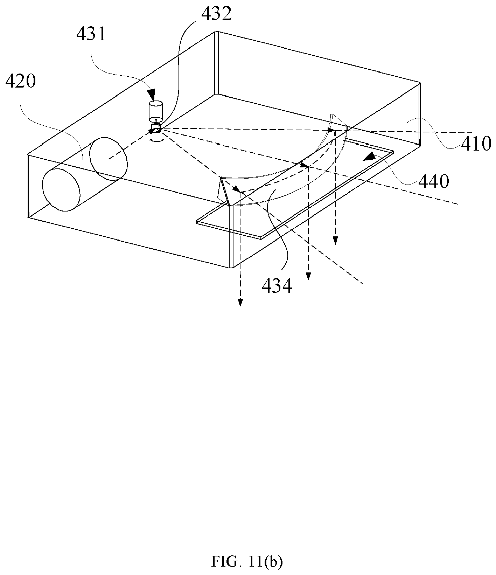

Exemplarily, referring to FIG. 10, FIG. 10 is a schematic view of a reflection path of a laser beam according to an embodiment of the present disclosure. The schematic view of the reflection path is based on a right-angled coordinate system established with an optical center as a coordinate origin, and then drawn based on the actual reflection process of the laser beam in the right-angled coordinate system. As shown in FIG. 11, the optical center is the circle center 0, the target scanning angle is $\alpha$, the current rotation angle is $\beta$, the target arc-shaped motion track on the second reflector is arc $\frown$AB, and the straight line AB is the chord length of arc $\frown$AB; the scanning radius is 0A, 0B, or 0P, where the target scanning angle is $\alpha$, and the current scanning angle is $\beta$. The perpendicular distance from point P to the X-axis is PC, the distance from point P to the straight line AB is PE, and the intersection of the straight line AB and the Y-axis is F.

At block 203: determining a current displacement compensation value of the scanning device based on the current rotation angle, the target scanning angle, and the scanning radius.

At block 204: controlling the scanning device, according to the current displacement compensation value, to move in a straight line along a target coordinate axis of a preset coordinate system of the scanning device, and returning to perform the step of determining the current displacement compensation value of the scanning device based on the current rotation angle, the target scanning angle, and the scanning radius, until the current angle rotation is equal to the target scanning angle; after the laser beam with the target arc-shaped motion track formed the optical element is emitted, forming a target straight-line motion track on the external object; where the coordinate system of the scanning device is a right-angle coordinate system established with an optical center of the first reflector as an origin, and the target coordinate axis is an coordinate axis, in the coordinate system of the scanning device, that is parallel to each other with the laser beam after being reflected from the optical center.

Further, after obtaining the current rotation angle, the target scanning angle, and the scanning radius, the current displacement compensation value of the scanning device may be determined based on a geometrical positional relationship between the current rotation angle, the target scanning angle, and the scanning radius. The current displacement compensation value is configured to reflect a displacement of the scanning device at the current rotation angle, when the target arc-shaped motion track corresponding to the target scanning angle is converted to the target straight-line motion track (referred to as straight-line track). In this way, the scanning device with the first reflector at the current rotation angle can be controlled to move in a straight line along a target coordinate axis of which origin is the optical center of the first reflector, such that the arc-shaped track can be converted into a straight-line track. The target coordinate axis is configured to reflect the direction in which the optical center of the laser beam passing through the first reflector is located, the target coordinate axis is a coordinate axis in the coordinate system of the scanning device that is mutually parallel to the laser beam after being reflected from the optical center, and thus the target coordinate axis is perpendicular to the target straight-line motion track. It is to be understood that the actual mounting direction of the scanning device may be changed based on the pattern or shape to be processed on the external object. However, regardless of the change of the mounting direction, the preset coordinate system of the scanning device will not change due to the change of the mounting direction. The scanning device coordinate system is a right-angled coordinate system, the origin of the right-angled coordinate system is the optical center of the first reflector, and one of the coordinate axes of the right-angled coordinate system is parallel to the laser beam reflected by the optical center. As shown in FIG. 11, the coordinate axis may be defined as Y-axis. Another of the coordinate axes axis is perpendicular to the direction in which the laser beam reflected by the optical center is located, which may be defined as X-axis as in FIG. 11.

Exemplarily, continuing to refer to FIG. 10, the coordinate system of the scanning device in FIG. 10 is X0Y. The origin of the coordinate axis is the circle center 0, which is the optical center of the first reflector. In FIG. 10, a first track point of the target arc-shaped motion track corresponding to the current rotation angle is point P, and the target straight-line motion track is AB, also the chord length corresponding to the target arc-shaped motion track. Therefore, the scanning device can move in a straight line along the target coordinate axis of the coordinate system X0Y. As shown in FIG. 10, the direction of the target coordinate axis is the Y-axis, and if the positions of the Y-axis and the X-axis are interchanged in the coordinate axes shown in FIG. 10, the direction of the target coordinate axis is the X-axis, which is not specifically limited here. For example, a positional origin of the scanning device may be regarded as the circle center 0, and the scanning device carries out motion in the positive direction or the negative direction along the Y-axis. Among them, the current displacement compensation value is a displacement value with a motion direction, and the motion direction is determined relative to the circle center 0. The target arc-shaped motion track is to be converted to the target straight-line motion track corresponding to the length of the chord, and therefore, the current displacement compensation value may be PE in the figure. The current compensation value may be obtained through the geometric positional relationship, which is converted to the displacement of the scanning device to conduct the reciprocating straight-line motion along the Y-axis. The obtained current displacement compensation value PE may be regarded as a coordinate position corresponding to the current rotation angle in the Y-axis. When the straight-line motion is performed, a current end point of the straight-line motion of the scanning device may be determined as the coordinate position on the Y-axis.

The present disclosure provides a method and system for controlling a scanning device, in which the first reflector is controlled to carry out rotational motion in accordance with the target scanning angle, and the reflection angle of the laser beam is changed in real time to form a continuous scanning track, thereby realizing a rotational scanning system, improving the speed of scanning or cutting, and thus improving the work efficiency. In addition, through the current rotation angle, the target scanning angle, and the scanning radius, the current displacement compensation value can be determined, and the current displacement compensation value is applied to control the scanning device to move in a straight line along the target coordinate axis of the coordinate system whose origin is the optical center of the first reflector, thereby forming a target straight-line motion track on the external object after the reflection of the laser beam with the target arc-shaped motion track formed on the optical element. In this way, the motion track that acts on the external object is a straight line, preventing the formation of an arc-shaped track on the external object. Moreover, after reaching the first reflector, the laser beam is projected onto the machining surface of the external object at an angle perpendicular to the machining surface of the external object. As a result, after reaching the reflector assembly, the laser beam has a uniform focal length at any point on the machining surface, forming a uniform-coarse motion track, thereby preventing a beveled cut formed on the machining surface when a cutting scan is performed.

Referring to FIG. 11(a) and FIG. 11(b), FIG. 11 (a) is another structural block view of a control system for a scanning device according to an embodiment of the present disclosure, and FIG. 11 (b) is a further another structural block view of a control system for a scanning device according to an embodiment of the present disclosure. The control system as shown in FIG. 11(a) or FIG. 11(b) includes at least a control device (not shown) and a scanning device, the control device being electrically connected to the scanning device.

The scanning device includes at least a housing 410, a laser transmitter 420, and a reflection assembly, the reflection assembly including at least a drive member 431, a first reflector 432, and an optical element 433. The first reflector 432 is configured to reflect a laser beam (illustrated in broken lines with arrow) emitted from the laser transmitter 420 to the optical element 433, and the optical element 433 is configured to reflect or refract the laser beam to an external object (not shown); the housing 410 defines a light outlet 440; the laser transmitter 420 and the reflection assembly are arranged in the housing 410; the drive member 431 is configured to drive the first reflector 432 to rotate based on a target scanning angle; the optical element 433 is specifically configured to reflect or refract the laser beam through the light outlet 440 to the external object, and the laser beam is perpendicular to a machining surface of the external object; the machining surface may be a surface of the external object parallel to a horizontal plane, or a surface parallel to a vertical plane, or other surfaces of the external object to be processed; the external object may be a workpiece or part to be processed, and since the laser beam, of the scanning device, reflected on the machining surface of the external object is reflected at an angle perpendicular to the machining surface, it can be ensured that the laser beam, after reaching the reflector assembly, is projected onto the surface of the workpiece at an angle perpendicular to the horizontal or vertical plane. After the laser beam reaches the reflector assembly, it is ensured that the laser beam has a uniform focal length at any point on the surface of the workpiece, with uniform thickness, and that beveled cuts are prevented.

It is to be noted that in the control device, as in FIG. 11(a) or FIG. 11(b), the control device is similar to the control device 100 shown in FIG. 7, the scanning device is similar to the scanning device 200 shown in FIG. 8, the laser transmitter 420 is similar to the laser transmitter 210 shown in FIG. 8, the first reflector 432 is similar to the first reflector 221 shown in FIG. 7, the second reflector 433 is similar to the second reflector 222 shown in FIG. 8, the external object is similar to the external object 200 shown in FIG. 8, and the reflection assembly is similar to the reflection assembly 220 shown in FIG. 8, which will not be repeated herein to avoid repetition, and specific reference can be made to the content of the control system shown in FIG. 8.

Further, the drive member 431 may be a motor, and the first reflector 432 is coaxially connected to the motor. The motor can drive the first reflector 432 to rotate a corresponding angle according to the control of the control system, which is simple in structure and has a fast response speed and high efficiency.

An emitting end of the laser transmitter 420 is arranged facing the first reflector 432, thereby causing the laser beam to be directed toward the first reflector 432, changing the emission direction of the laser beam, and realizing a change in the position of the laser beam acting on the external object. The circle center of the rotation track of the first reflector coincides with the circle center of the motion track of the laser beam, and the motion track of the laser beam is also known as the target arc-shaped motion track.

The first reflector 432 may be a rectangular sheet structure. The first reflector 432 may be a square sheet structure, and a front side of the first reflector 432 is an operation surface for receiving and reflecting the laser beam emitted from the emitting end of the laser transmitter 420. Such a sheet structure may facilitate finding the center position for mounting the first reflector 432, and the sheet structure enables first reflector 432 to be rotated at a relatively large angle while achieving the same effect as compared to a structure such as a square tetrahedron.

By rotating the first reflector 432 in a small angle, the laser beam after reflected by the first reflector 432 forms a larger-arc direction change, thereby realizing small angle-large distance leverage efficiency improvement, thus improving operation efficiency; and the change of the action position of the laser beam on the external object can expand the action range of the laser beam to a certain extent, thereby improving the scanning efficiency. Compared to a design where the motion of the scanning device causes the position of the laser beam acting on the external object to change, changing the action position by rotating the first reflector 432 is faster and more efficient.

Exemplarily, as in FIG. 11(a) or FIG. 11(b), the first reflector 432 may be arranged on a centerline of the housing 410, such as a centerline corresponding to a longest side of a longest surface, such that the target arc-shaped motion track may be the longest, and thus the chord length may be the longest, increasing the laser action range.

It should be noted that when the distance between the first reflector 432 and the optical element 433 is farther, i.e., when the mounting distance is farther, the scanning radius is longer, such that the arc-shaped motion track at the same angle will be longer, and the operation range can be further increased. Therefore, the mounting distances of the first reflector and the optical element can be as far as possible in the housing.

The light outlet 440 is elongated in shape, the elongated light outlet 440 facilitates laser beams directed at different positions of the light outlet 440 to be emitted from the light outlet 440. Referring to FIG. 11(a) and FIG. 11(b) illustrating a machining environment where a machining surface is parallel to a horizontal plane, the optical element is arcuate, and the optical element may be an arcuate concave reflector 433 in FIG. 11(a) or an arcuate lens 434 in FIG. 11 (b). When the optical element is the arcuate concave reflector 433, the optical element 433 is inclined 45° toward the first reflector 432, thereby causing the laser beam to have an angle of incidence with the arcuate optical element of 45°, which in turn causes the laser beam to be emitted from the light outlet 440 at an angle of the perpendicular to the horizontal plane after passing through the arcuate optical element 433.

Alternatively, the optical element is an arcuate lens 434, which is arranged opposite to the first reflector 432 and has an emitting surface of 45°. Taking FIG. 11(b) as an example, the operation surface of the first reflector is perpendicular to the horizontal plane, and the arcuate lens 434 is placed at a position where the angle between the emitting surface and the horizontal plane is 45°. In this way, after the laser beam is incident to the arcuate lens 434, the laser beam can be refracted to the machining surface of the workpiece by the 45° emitting surface, such that the laser beam refracted by the arcuate lens 434 can be perpendicular to the machining surface. When the operation surface is perpendicular to the vertical plane, the arcuate lens may be placed at a position where the angle between the emitting surface and the vertical plane is 45°, such that the laser beam refracted by the arcuate lens 434 can be perpendicular to the machining surface. The combined scanning of the first reflector 432 and the concave reflector 433 enables a uniform focal length of the laser beam emitted from the light outlet 440 towards the external object, which results in a uniform-lightness pattern formed by marking. The center of the concave reflector 433 or the arcuate lens 434 in the height direction is in the same straight line as the position of the laser beam directed to the first reflector 432.

It is to be noted that the scanning device as shown in FIG. 11(a) or FIG. 11(b) may be arranged to a machining bench in specific use. The machining bench may be arranged with a motor to control the scanning device to perform a linear motion (straight-line motion) along the Y-axis in order to convert an arc-shaped track into a straight-line track, such that a straight-line processing trace is formed on the external object. In this case, the formed straight-line track is parallel to the X-axis. When it is required to continue cutting another straight line parallel to the X-axis on the workpiece, before starting the laser scanning of another straight line, according to a distance between the other straight line and the current straight line, the motor is controlled to drive the scanning device to move along the Y-axis to a position corresponding to the distance, and the method of controlling the scanning device described in the present disclosure is executed. Conversely, the machining bench may be arranged with a motor to control the scanning device to perform a linear motion along the X-axis in order to convert an arc-shaped track into a straight-line track. In this case, the formed straight-line track is parallel to the Y-axis. The X-axis and the Y-axis are coordinate axes of the coordinate system of the scanning device. The origin of the coordinate system of the scanning device is the circle center 0 in FIG. 3. By virtue of the above design, the action range of the laser beam may be increased, thereby improving processing efficiency. The processing attitude of the scanning device may be continuously changed to form at least one pattern or shape desired on the workpiece under the condition that the attitude of the workpiece remains unchanged. The processing attitude, which is also the positional relationship of the scanning device with respect to the machining surface of the workpiece, may be controlled according to the actual laser processing needs of the scanning device, and the present disclosure will not be limited herein.

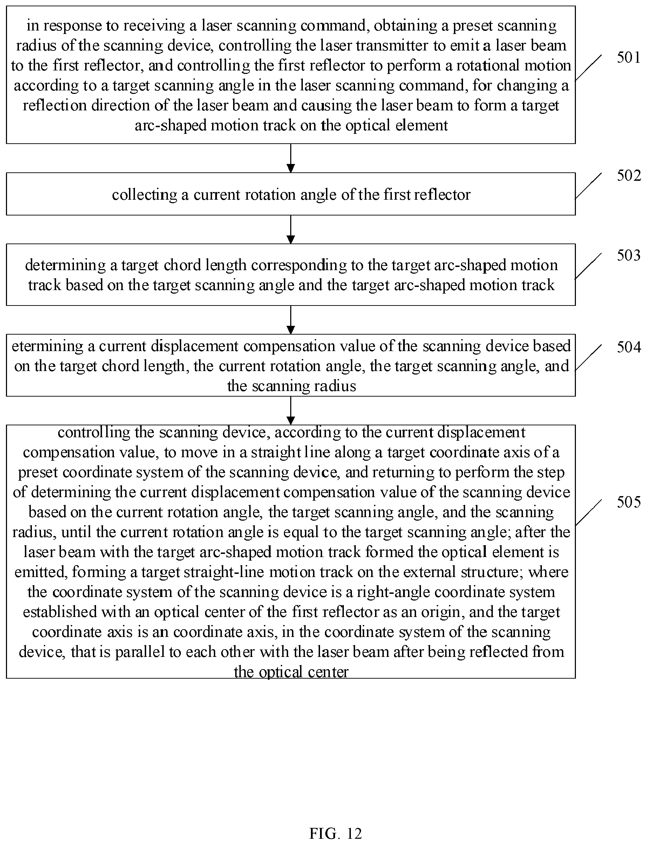

Referring to FIG. 12, FIG. 12 is another flowchart of a control method of a scanning device according to an embodiment of the present disclosure. The control method is applied to a control system shown in FIG. 8, FIG. 11(a) or FIG. 11(b), and the control method includes the following steps.

At block 501: in response to receiving a laser scanning command, obtaining a preset scanning radius of the scanning device, controlling the laser transmitter to emit a laser beam to the first reflector, and controlling the first reflector to perform a rotational motion according to a target scanning angle in the laser scanning command, for changing a reflection direction of the laser beam and causing the laser beam to form a target arc-shaped motion track on the optical element.

At block 502: collecting a current rotation angle of the first reflector.

It should be noted that the contents of step 501 and step 502 are similar to the step 201 and step 202 in the control method shown in FIG. 9, which will not be repeated herein to avoid repetition, and specific reference can be made to the content of the step 201 and step 202 in the control method shown in FIG. 10.

At block 503: determining a target chord length corresponding to the target arc-shaped motion track based on the target scanning angle and the target arc-shaped motion track.

Exemplarily, the finally obtained target straight-line motion track may be the target arc-shaped motion track corresponding to the target scanning angle. Therefore, a target chord length corresponding to the target arc-shaped motion track may be determined by determining the target chord length corresponding to the target arc-shaped motion track according to the target scanning angle and the target arc-shaped motion track.

At block 504: determining a current displacement compensation value of the scanning device based on the target chord length, the current rotation angle, the target scanning angle, and the scanning radius.

Further, the target chord length, the current rotation angle, the target scanning angle, and the scanning radius may be applied to determine the straight-line motion track corresponding to the target chord length to be obtained, and further the current displacement compensation value of the scanning device at the current rotation angle. The current displacement compensation value may be obtained by combining the principles of various geometric relationships and performing conversion calculation using the target chord length, the current rotation angle, the target scanning angle, and the scanning radius.

In an implementation, the geometric principles may be trigonometric principles, and the step 504 may include steps K1 to K3:

    K1: determining a first trigonometric function value of the current rotation angle based on the target chord length, the current rotation angle, and the scanning radius.

    K2: determining a second trigonometric function value of the target scanning angle based on the target chord length, the target scanning angle, and the scanning radius.

Continuing to refer to FIG. 10 and to FIG. 11(a), the laser transmitter 420 emits a laser beam which is reflected by the rotating first reflector 432 to the annular second reflector 433 or the annular lens. The laser beam, after reflected again by the annular second reflector 433 to the workpiece, is projected on the workpiece at an angle perpendicular to the horizontal plane. When the first reflector 432 is rotated or oscillated at different angles, an annular beam ⌒AB is formed by the projected beam in the direction of the X-axis in FIG. 10. The annular beam ⌒AB is obtained by projection by rotating or oscillating in the left-right direction with the rotating first reflector as the optical center (center O). In this way, the ⌒AB with left-right symmetric arc length is formed, i.e., the target arc-shaped motion track ⌒AB, and the target straight-line motion track is the chord length of ⌒AB. The arc length ⌒AB of an upper part of the chord length AB is converted into a horizontal straight-line beam of the chord length AB. Therefore, based on the geometrical positional relationship between the angle and the line segment shown in FIG. 10, it can be known that when the target scanning angle of the rotating first reflector, the scanning radius, and the target chord length are known, the target scanning angle is a rotation angle of α symmetrical in the left-right rotation and the target scanning angle is a maximal rotation angle, and the mounting distance from the rotating first reflector as the optical center (circle center O) to the annular second reflector or annular lens is equal to the scanning beam radius. When it is required to obtain the perpendicular distance PE between any point P on the arc-shaped track and the arc length, it can be obtained by conversions based on geometric positional relationships, for example, trigonometric algorithms. In turn, the first trigonometric function value of the current rotation angle and the second trigonometric function value of the target scanning angle can be obtained, where the trigonometric function values include, but are not limited to, sine, cosine, tangent, and so on, and the present disclosure is illustrated with the cosine value as an example.

K3: determining the current displacement compensation value of the scanning device based on the first trigonometric function value, the second trigonometric function value, and the scanning radius.

Specifically, when the first trigonometric function value is a first cosine value and the second trigonometric function value is a second cosine value, the step K3 may include: determining a first difference between the first cosine value and the second cosine value; inputting the first difference value and the scanning radius into a predetermined displacement compensation algorithm, and obtaining the current displacement compensation value output by the displacement compensation algorithm.

Exemplarily, the displacement compensation algorithm includes the following mathematical expression.

$$PE = OP \times (COS\beta - COS\alpha)$$

where PE is the current displacement compensation value, OP is the scanning radius, $\beta$ is the current rotation angle, $\alpha$ is the target scanning angle, COS$\beta$ is the first cosine value, and COS$\alpha$ is the second cosine value. The first difference is equal to COS$\beta$-COS$\alpha$.

In order to make the principle of realization in the present disclosure clearer, FIG. 10 and FIG. 11(a) are taken as examples to illustrate the principle of track conversions of the present disclosure with specific reference to the following.

The laser transmitter in FIG. 11(a) emits a beam which is reflected by the rotating first reflector assembly to the annular reflector or annular lens, and when the beam is reflected to the workpiece again, it is projected at an angle perpendicular to the horizontal plane. When the rotating first reflector is rotated or oscillated at different angles, the projected beam in the direction of the X-axis forms an annular beam. Referring to FIG. 10, the annular beam happens to be the left-right symmetric arc length ⌒AB formed by projection by left-right rotating or oscillating with the rotating first reflector as the optical center (circle center O).

The present disclosure is to convert the arc length ⌒AB of the upper part of the chord length AB into a horizontal straight-line beam of the chord length AB. Specifically, the conditions are known: the left and right rotation angles of the rotating first reflector are symmetrical $\alpha$(s), and the mounting distance from the rotating first reflector as the optical center (circle center O) to the annular reflector (3) or annular lens is equal to the scanning beam radius, i.e., OA = OP = OB.

P point is an arbitrary point in the annular beam track, setting the included angle between the P point and the Y-axis to be $\beta$, the vertical distance from the P point to the X-axis to be PC, the distance from the P point to the horizontal straight-line beam to be PE, then PE = PC - EC; where E is any point of the horizontal straight-line beam AB, the horizontal straight-line beam AB and X-axis are parallel, that is, the vertical distance from any point E of the horizontal straight-line beam AB to the X-axis is equal, i.e., PE = PC - EC = PC-BD;

According to the trigonometric function: BD = OB × SIN(90 - $\alpha$), PC = OP × SIN(90 - $\beta$);
Since PE = PC - EC = PC- BD, then PE = OP × SIN(90 - $\beta$) - (OB × SIN(90 - $\alpha$));
Since the radii are equal OA = OP = OB;
It can be obtained thatPE = OP × SIN(90 - $\beta$) - (OB × SIN(90 - $\alpha$)) = OP × SIN(90 - $\beta$) - (OP × SIN(90 - $\alpha$)) = OP × (COS$\beta$ - COS$\alpha$), i.e., the compensation in the Y-axis when converting the annular beam ⌒AB into the horizontal straight-line beam AB is PE = OP × (COS$\beta$ - COS$\alpha$).

Therefore, in the actual conversion process, as long as the target scanning angle $\alpha$, the current rotation angle $\beta$, and the scanning radius OP are obtained, the current displacement compensation value PE can be obtained. It can be understood that the displacement compensation algorithm shown does not require complex calculations to realize the conversion of the arc-shaped track to the straight-line track, and the results can be quickly calculated and the scanning device can be quickly controlled to move in the laser processing, which can improve the efficiency of laser processing. Moreover, the scanning device is only required to be controlled to carry out reciprocating linear motion in the direction of the target coordinate axis that is perpendicular to the target straight-line motion track, and the straight-line track can be obtained without complex motion control, which further improves the efficiency of the laser processing and meets the operational requirements of the laser processing. It should be noted that the displacement compensation algorithm shown above does not require complex calculations, and there may be a variety of deformations, which are not exhaustive. The deformations that do not deviate from the technical conception of the present embodiments belong to the scope of the present disclosure.

At block 505: controlling the scanning device, according to the current displacement compensation value, to move in a straight line along a target coordinate axis of a preset coordinate system of the scanning device, and returning to perform the step of determining the current displacement compensation value of the scanning device based on the current rotation angle, the target scanning angle, and the scanning radius, until the current rotation angle is equal to the target scanning angle; after the laser beam with the target arc-shaped motion track formed the second reflector is emitted, forming a target straight-line motion track on the external object; where the coordinate system of the scanning device is a right-angle coordinate system established with an optical center of the first reflector as an origin, and the target coordinate axis is an coordinate axis, in the coordinate system of the scanning device, that is parallel to each other with the laser beam after being reflected from the optical center.

It should be noted that step 505 is similar to the step 204 shown in FIG. 9, which will not be repeated herein to avoid repetition, and specific reference can be made to the content of step 204 shown in FIG. 9.

The present disclosure provides a method and system for controlling a scanning device, in which the first reflector is controlled to carry out a rotational motion in accordance with a target scanning angle, and the reflection angle of the laser beam is changed in real time to form a continuous scanning track, thereby realizing a rotational scanning system with a faster response speed, improving the speed of scanning or cutting, and thus improving the work efficiency. In addition, through the current rotation angle, the target scanning angle, and the scanning radius, the current displacement compensation value can be determined, and the current displacement compensation value is applied to control the scanning device to move in a straight line along the direction of the target coordinate axis of the coordinate system whose origin is the optical center of the first reflector, thereby forming a target straight-line motion track on the external object after the reflection of the laser beam with the target arc-shaped motion track formed on the second reflector. In this way, the motion track that acts on the external object is a straight line, preventing the formation of an arc-shaped track on the external object. Moreover, the first reflector and the second reflector are combined for scanning to overcome the problem of inconsistency in the thickness of the scanning and cutting lines and the lightness of the patterns caused by inconsistency in the focal length of a galvanometer scanning system. Further, the first reflector and the second reflector are separately mounted with a certain mounting distance between the two. As long as the first reflector assembly rotates a small angle, the second reflector can form a very long arc of light, thereby realizing small angle-large distance leverage efficiency improvement, where beam moves faster and the action range is larger. The second reflector is responsible for reflecting light perpendicular to the horizontal plane, such that the scanning or cutting of workpieces is without beveling phenomenon.

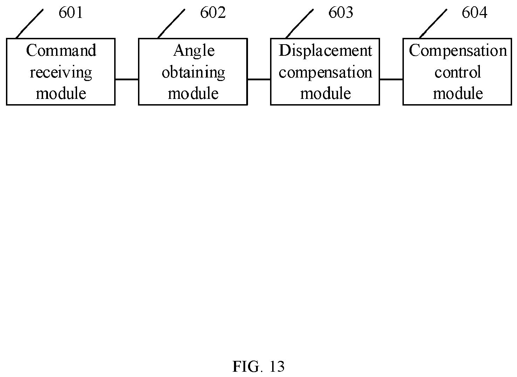

Referring to FIG. 13, FIG. 13 is a structural block view of a control device for a scanning device according to an embodiment of the present disclosure. The control device as shown in FIG. 13 is applied to a control system, where the control system includes at least a scanning device including at least a laser transmitter and a reflecting assembly, wherein the reflecting assembly includes at least a first reflector and a second reflector. The first reflector is configured to reflect a laser beam emitted from the laser transmitter to the optical element, and the optical element is configured to reflect or refract the laser beam to an external object. The control device includes the following elements.

A command receiving module 601, configured to, in response to receiving a laser scanning command, obtain a preset scanning radius of the scanning device, control the laser transmitter to emit a laser beam to the first reflector, and control the first reflector to perform a rotational motion according to a target scanning angle in the laser scanning command, for changing a reflection direction of the laser beam and causing the laser beam to form a target arc-shaped motion track on the second reflector.

An angle obtaining module 602, configured to collect a current rotation angle of the first reflector.

A displacement compensation module 603, configured to determine a current displacement compensation value of the scanning device based on the current rotation angle, the target scanning angle, and the scanning radius.

A compensation control module 604, configured to control the scanning device, according to the current displacement compensation value, to move in a straight line along a target coordinate axis of a preset coordinate system of the scanning device, and return to perform the step of determining the current displacement compensation value of the scanning device based on the current rotation angle, the target scanning angle, and the scanning radius, until the current angle rotation is equal to the target scanning angle; after the laser beam with the target arc-shaped motion track formed the second reflector is emitted, form a target straight-line motion track on the external object; where the coordinate system of the scanning device is a right-angle coordinate system established with an optical center of the first reflector as an origin, and the target coordinate axis is an coordinate axis, in the coordinate system of the scanning device, that is parallel to each other with the laser beam after being reflected from the optical center.

It should be noted that the roles of the various modules in the control device shown in FIG. 13 are similar to the contents of the various steps in the control method described in FIG. 9, which will not be repeated herein to avoid repetition, and specific reference may be made to the contents of the various steps in the control method described in FIG. 9.

The present disclosure provides a control device for a scanning device, in which the first reflector is controlled to carry out rotational motion in accordance with the target scanning angle, and the reflection angle of the laser beam is changed in real time to form a continuous scanning track, thereby realizing a rotational scanning system, improving the speed of scanning or cutting, and thus improving the work efficiency. In addition, through the current rotation angle, the target scanning angle, and the scanning radius, the current displacement compensation value can be determined, and the current displacement compensation value is applied to control the scanning device to move in a straight line along the target coordinate axis of the coordinate system whose origin is the optical center of the first reflector, thereby forming a target straight-line motion track on the external object after the reflection of the laser beam with the target arc-shaped motion track formed on the optical element. In this way, the motion track that acts on the external object is a straight line, preventing the formation of an arc-shaped track on the external object. Moreover, after reaching the first reflector, the laser beam is projected onto the machining surface of the external object at an angle perpendicular to the machining surface of the external object. As a result, after reaching the reflector assembly, the laser beam has a uniform focal length at any point on the machining surface, forming a uniform-coarse motion track, thereby preventing a beveled cut formed on the machining surface when a cutting scan is performed.

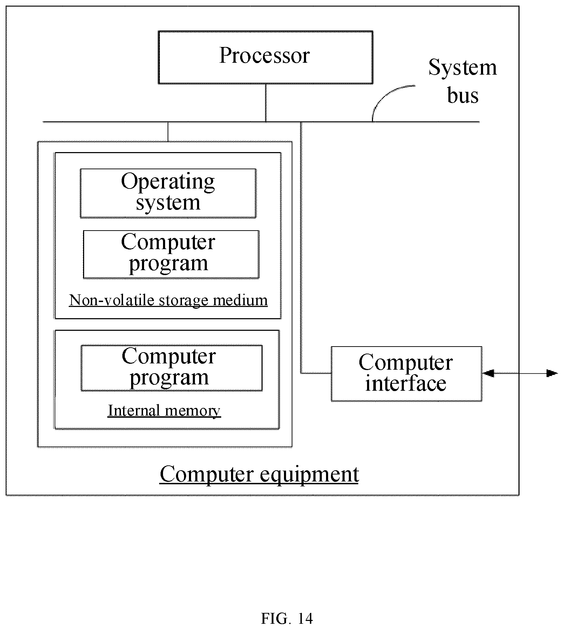

FIG. 14 is a structural block view of a computer equipment according to an embodiment of the present disclosure. The computer equipment may specifically be a terminal or a server. As shown in FIG. 14, the computer equipment includes a processor, a memory, and a network interface connected through a system bus. The memory includes a non-volatile storage medium and an internal memory. The non-volatile storage medium of the computer equipment stores an operating system and may further store a computer program which, when executed by the processor, causes the processor to implement the method described above. The internal memory may store a computer program which, when executed by the processor, causes the processor to implement the methods described above. It will be appreciated by those skilled in the art that the structure illustrated in FIG. 13, which is only a block diagram of a portion of the structure related to the embodiments of the present disclosure and does not constitute a limitation on the computer equipment to which the embodiments of the present disclosure are applied, and that a specific computer equipment may include more or fewer components than those shown in the drawing, or may combine some of the components, or may have a different arrangement of components.

In some embodiments, a computer equipment is proposed including a memory and a processor, the memory storing a computer program; when executed by the processor, the computer program causes the processor to perform the steps of a method such as that shown in FIG. 9 or FIG. 12.

In some embodiments, a computer-readable storage medium is proposed storing a computer program; when executed by the processor, the computer program causes the processor to perform the steps of a method such as that shown in FIG. 9 or FIG. 12.

Those skilled in the art may understand that realizing all or part of the processes in the methods of the above embodiments is possible to be accomplished by a computer program to instruct relevant hardware, the program being storable in a non-volatile computer-readable storage medium. When the program is executed, processes such as those in each of the above methods in the embodiments can be performed. Any reference to a memory, storage, database, or other medium used in the embodiments provided in the present disclosure may include non-volatile and/or volatile memory. The non-volatile memory may include read-only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, RAM is available in a variety of forms, such as static RAM (SRAM), dynamic RAM (DRAM), synchronous DRAM (SDRAM), dual data rate SDRAM (DDRSDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM).

The technical features of the above embodiments can be combined in any way, and for the sake of conciseness, all possible combinations of the technical features of the above embodiments have not been described; however, as long as there is no contradiction in the combinations of the technical features, they should be considered to be within the scope of the present disclosure.

The above embodiments disclose only several embodiments of the present disclosure, which are described in a more specific and detailed manner, but are not to be construed as a limitation of the scope of the present disclosure. It should be noted that, for those skilled in the art, several deformations and improvements can be made without departing from the conception of the present disclosure, all of which fall within the scope of the present disclosure. Therefore, the scope of the present disclosure shall be subject to the appended claims.

**Claims**

1. A scanning device, comprising a laser transmitter and a reflection assembly;

   wherein the reflection assembly comprises a drive member and a first reflector, the drive member being configured to drive the first reflector to rotate;

the laser transmitter is configured to emit a laser beam, and an emitting end of the laser transmitter is arranged facing the first reflector, causing the laser beam being emitting toward the first reflector and the first reflector to reflect the laser beam to change a direction of the laser beam.

2. The scanning device according to claim 1, further comprising a housing; wherein the laser transmitter and the reflection assembly are arranged in the housing;

the housing defines a light outlet, and the laser beam is capable of being emitted through the light outlet to act on an external object.

3. The scanning device according to claim 1, wherein a rotation track of the first reflector is a first sector, and a motion track of the reflected laser beam is a second sector; a circle center of the first sector is coincided with a circle center of the second sector, and a radius of the second sector is greater than a radius of the first sector, thereby making an arc of the second sector larger than an arc of the first sector.

4. The scanning device according to claim 1, wherein the reflection assembly further comprises an optical element, and the optical element is arranged facing the first reflector, such that the laser beam reflected by the first reflector acts on the optical element;

the optical element is configured to change the direction of the laser beam.

5. The scanning device according to claim 1, further comprising a housing; wherein the reflection assembly is arranged in the housing; the housing defines a light outlet, and the light outlet is disposed facing the optical element, such that the laser beam reflected by the first reflector acts on the optical element and is reflected or refracted by the optical element and emitted through the light outlet in a direction perpendicular to a horizontal plane.

6. The scanning device according to claim 5, wherein a center of the optical element in a height direction is in a same straight line as a position of the laser beam directed to the first reflector.

7. The scanning device according to claim 6, wherein the emitting end of the laser transmitter is in a same straight line as a center region of the first reflector, such that the laser beam is directed to the first reflector at a position of the center region of the first reflector.

8. The scanning device according to claim 7, wherein the first reflector is a rectangular sheet structure.

9. The scanning device according to claim 8, wherein the first reflector is disposed at a central position within the housing in a length direction, and the first reflector is disposed on a side of the housing away from the light outlet in a width direction.

10. A laser apparatus, comprising the scanning device according to any of claims 1 to 9.

11. A method for controlling a scanning device, performed by a control system; wherein the control system comprises at least a scanning device, the scanning device comprising at least a laser transmitter and a reflection assembly; the reflection assembly comprises at least a first reflector and an optical element, the first reflector is configured to reflect a laser beam emitted by the laser transmitter to the optical element, and the optical element is configured to reflect or refract the laser beam to an external object, the laser beam being reflect or refracted to the external object in a direction perpendicular to a machining surface of the external object; the method comprises:

in response to receiving a laser scanning command, obtaining a scanning radius of the scanning device, controlling the laser transmitter to emit the laser beam to the first reflector, and controlling the first reflector to perform a rotational motion according to a target scanning angle in the laser scanning command, for changing a reflection direction of the laser beam and causing the laser beam to form a target arc-shaped motion track on the optical element; wherein the scanning radius is preset;

collecting a current rotation angle of the first reflector;

determining a current displacement compensation value of the scanning device based on the current rotation angle, the target scanning angle, and the scanning radius; and

controlling the scanning device, according to the current displacement compensation value, to move in a straight line along a target coordinate axis of a preset coordinate system of the scanning device, and returning to perform the determining a current displacement compensation value of the scanning device based on the current rotation angle, the target scanning angle, and the scanning radius, until the current angle rotation is equal to the target scanning angle;

after the laser beam with the target arc-shaped motion track formed the second reflector is emitted, forming a target straight-line motion track on the external object; wherein the preset coordinate system of the scanning device is a right-angle coordinate system established with an optical center of the first reflector as an origin, and the target coordinate axis is an coordinate axis, in the preset coordinate system of the scanning device, that is parallel to each other with the laser beam after being reflected from the optical center.

12. The method according to claim 11, wherein the determining a current displacement compensation value of the scanning device based on the current rotation angle, the target scanning angle, and the scanning radius comprises:

determining a target chord length corresponding to the target arc-shaped motion track based on the target scanning angle and the target arc-shaped motion track; and
determining the current displacement compensation value of the scanning device based on the target chord length, the current rotation angle, the target scanning angle, and the scanning radius.

13. The method according to claim 12, wherein determining the current displacement compensation value of the scanning device based on the target chord length, the current rotation angle, the target scanning angle, and the scanning radius comprises:

determining a first trigonometric function value of the current rotation angle based on the target chord length, the current rotation angle, and the scanning radius;
determining a second trigonometric function value of the target scanning angle based on the target chord length, the target scanning angle, and the scanning radius; and
determining the current displacement compensation value of the scanning device based on the first trigonometric function value, the second trigonometric function value, and the scanning radius.

14. The method according to claim 13, wherein the first trigonometric function value is a first cosine value and the second trigonometric function value is a second cosine value, and the determining the current displacement compensation value of the scanning device based on the first trigonometric function value, the second trigonometric function value, and the scanning radius comprises:

determining a first difference between the first cosine value and the second cosine value; and
inputting the first difference value and the scanning radius into a predetermined displacement compensation algorithm, and obtaining the current displacement compensation value output by the displacement compensation algorithm.

15. The method according to claim 11, wherein the displacement compensation algorithm comprises a following mathematical expression:

$$PE = OP \times (COS\beta - COS\alpha);$$

where PE is the current displacement compensation value, OP is the scanning radius, $\beta$ is the current rotation angle, and $\alpha$ is the target scanning angle.

<u>200</u>

FIG. 1

FIG. 2

FIG. 3

FIG. 4

30

31

313

36

34

20

FIG. 5

<u>36</u>

361

363

FIG. 6a

36'

361'

363'

FIG. 6b

FIG. 7

200

100

210 221 222

Control apparatus

Laser transmitter

Reflector

Optical element

External structure

300

Reflection assembly

220

Scanning device

000

Control system of scanning device

FIG. 8

in response to receiving a laser scanning command, obtaining a preset scanning radius of the scanning device, controlling the laser transmitter to emit a laser beam to the first reflector, and controlling the first reflector to perform a rotational motion according to a target scanning angle in the laser scanning command, for changing a reflection direction of the laser beam and causing the laser beam to form a target arc-shaped motion track on the optical element — 201

collecting a current rotation angle of the first reflector — 202

determining a current displacement compensation value of the scanning device based on the current rotation angle, the target scanning angle, and the scanning radius — 203

controlling the scanning device, according to the current displacement compensation value, to move in a straight line along a target coordinate axis of a preset coordinate system of the scanning device, and returning to perform the step of determining the current displacement compensation value of the scanning device based on the current rotation angle, the target scanning angle, and the scanning radius, until the current angle rotation is equal to the target scanning angle; after the laser beam with the target arc-shaped motion track formed the optical element is emitted, defining a target straight-line motion track on the external structure; where the coordinate system of the scanning device is a right-angle coordinate system established with an optical center of the first reflector as an origin, and the target coordinate axis is an coordinate axis, in the coordinate system of the scanning device, that is parallel to each other with the laser beam after being reflected from the optical center — 204

FIG. 9

FIG. 10

FIG. 11(a)

FIG. 11(b)

in response to receiving a laser scanning command, obtaining a preset scanning radius of the scanning device, controlling the laser transmitter to emit a laser beam to the first reflector, and controlling the first reflector to perform a rotational motion according to a target scanning angle in the laser scanning command, for changing a reflection direction of the laser beam and causing the laser beam to form a target arc-shaped motion track on the optical element

501

collecting a current rotation angle of the first reflector

502

determining a target chord length corresponding to the target arc-shaped motion track based on the target scanning angle and the target arc-shaped motion track

503

etermining a current displacement compensation value of the scanning device based on the target chord length, the current rotation angle, the target scanning angle, and the scanning radius

504

controlling the scanning device, according to the current displacement compensation value, to move in a straight line along a target coordinate axis of a preset coordinate system of the scanning device, and returning to perform the step of determining the current displacement compensation value of the scanning device based on the current rotation angle, the target scanning angle, and the scanning radius, until the current rotation angle is equal to the target scanning angle; after the laser beam with the target arc-shaped motion track formed the optical element is emitted, forming a target straight-line motion track on the external structure; where the coordinate system of the scanning device is a right-angle coordinate system established with an optical center of the first reflector as an origin, and the target coordinate axis is an coordinate axis, in the coordinate system of the scanning device, that is parallel to each other with the laser beam after being reflected from the optical center

505

FIG. 12

601 602 603 604

| Command receiving module | Angle obtaining module | Displacement compensation module | Compensation control module |

FIG. 13

Processor

System bus

Operating system

Computer program

Non-volatile storage medium

Computer program

Internal memory

Computer interface

Computer equipment

FIG. 14

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H07 178581 A (TOSHIBA CORP) 18 July 1995 (1995-07-18) * abstract; figures 1,2,5,7,10-13 * | 1,4,10 | INV. G02B26/10 B23K26/082 |
| X | US 2015/069027 A1 (NAKAZAWA MUTSUHIRO [JP] ET AL) 12 March 2015 (2015-03-12) * abstract; figures 1-5 * * paragraph [0008] – paragraph [0020] * * paragraph [0029] – paragraph [0041] * * paragraph [0045] – paragraph [0082] * | 1,3-15 | |
| X | US 2021/114139 A1 (NISHIMURA RYUUTAROU [JP]) 22 April 2021 (2021-04-22) * abstract; figures 1,3-5,7,8 * * paragraph [0007] – paragraph [0012] * * paragraph [0030] – paragraph [0049] * | 1,2,5-15 | |
| X | US 2021/260692 A1 (NAKAZAWA MUTSUHIRO [JP] ET AL) 26 August 2021 (2021-08-26) * abstract; figures 1-3 * * paragraph [0007] – paragraph [0011] * | 1,3,5-10 | |

TECHNICAL FIELDS
SEARCHED (IPC)

G02B
B23K

The present search report has been drawn up for all claims

| Place of search | Date of completion of the search | Examiner |
|---|---|---|
| Munich | 9 February 2024 | Jakober, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4616

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2024

| Patent document cited in search report | | Publication date | Patent family member(s) | | Publication date |
|---|---|---|---|---|---|
| JP H07178581 | A | 18-07-1995 | NONE | | |
| US 2015069027 | A1 | 12-03-2015 | CN | 104115051 A | 22-10-2014 |
| | | | JP | 5906115 B2 | 20-04-2016 |
| | | | JP | 2013205685 A | 07-10-2013 |
| | | | KR | 20140124426 A | 24-10-2014 |
| | | | TW | 201345642 A | 16-11-2013 |
| | | | US | 2015069027 A1 | 12-03-2015 |
| | | | WO | 2013145683 A1 | 03-10-2013 |
| US 2021114139 | A1 | 22-04-2021 | CN | 112676696 A | 20-04-2021 |
| | | | DE | 102020211914 A1 | 22-04-2021 |
| | | | JP | 7396851 B2 | 12-12-2023 |
| | | | JP | 2021065897 A | 30-04-2021 |
| | | | US | 2021114139 A1 | 22-04-2021 |
| US 2021260692 | A1 | 26-08-2021 | CN | 112352187 A | 09-02-2021 |
| | | | EP | 3812825 A1 | 28-04-2021 |
| | | | IL | 279540 A | 31-01-2021 |
| | | | JP | 7136602 B2 | 13-09-2022 |
| | | | JP | 2020003518 A | 09-01-2020 |
| | | | KR | 20210008094 A | 20-01-2021 |
| | | | RU | 2754523 C1 | 02-09-2021 |
| | | | TW | 202014755 A | 16-04-2020 |
| | | | US | 2021260692 A1 | 26-08-2021 |
| | | | WO | 2020004178 A1 | 02-01-2020 |

EPO FORM P0459

For more details about this annex : see Official Journal of the European Patent Office, No. 12/82